(19) Europäisches Patentamt
European Patent Office
Office européen des brevets

(11) **EP 2 945 293 B1**

(12) **EUROPEAN PATENT SPECIFICATION**

(45) Date of publication and mention
of the grant of the patent:
**17.10.2018 Bulletin 2018/42**

(51) Int Cl.:
***H04B 1/38*** *(2015.01)*     ***H04W 36/16*** *(2009.01)*

(21) Application number: **14168168.4**

(22) Date of filing: **13.05.2014**

(54) **Wireless communication network management**

Drahtlose Kommunikationsnetzverwaltung

Gestion de réseau de communication sans fil

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.11.2015 Bulletin 2015/47**

(73) Proprietor: **FUJITSU LIMITED
Kawasaki-shi,
Kanagawa 211-8588 (JP)**

(72) Inventors:
• **Tesanovic, Milos
Harrow, Middlesex HA2 8FE (GB)**
• **Agarwal, Rajni
Ickenham, UB10 8TY (GB)**

(74) Representative: **Haseltine Lake LLP
Lincoln House, 5th Floor
300 High Holborn
London WC1V 7JH (GB)**

(56) References cited:
**EP-A1- 2 670 054      EP-A1- 2 670 197
WO-A1-2012/067563    US-A1- 2003 228 875**

**Description**

Embodiments of the present invention relate to wireless communication network management.

While according to the World Health Organization no adverse health effects of radio frequency electromagnetic fields (RF-EMF) have been established to date, EMF exposure from wireless communication networks is nonetheless often cited as a major cause of public concern and is frequently given considerable media coverage. Consequently EMF-aware networking is of interest to network providers.

There is a considerable amount of research and standardisation on defining and enforcing EMF safety limits. Current standards and metrics are built to either specifically measure the compliance of a given device or to evaluate the exposure at a specific location in a given system, which operates at a maximum power level. Additionally, current metrics do not take user quality-of-service (QoS) into account, including various ways in which EMF levels could be reduced while maintaining the required QoS.

Although various approaches to limiting EMF exposure due to mobile devices have been proposed, the focus is on actions performed by the UE leading to a reduction in individual exposure, rather than on actions which take an overall view of the system. In particular, current network management techniques do not take into account EMF exposure, neither via EMF key performance indicators (KPIs) nor via EMF "alarms".

EP 2 670 197 discloses a prior art system for handover taking UL transmit power and EMF exposure into account.

According to an embodiment of a first aspect of the present invention there is provided a wireless communication network management method for managing network connectivity of user equipments connected to a first wireless communication network, which method comprises making a decision as to whether to change a distribution of user equipments across connectivity paths in the first wireless communication network, when it is desired to effect a change in, or to maintain, a value of a measure of electromagnetic field exposure experienced by a population of equipment users as a result of the first wireless communication network.

Population exposure (PE) for equipment users comprises two EMF components. The first component is fixed and caused by any number of sources external to the network over which network providers have no control (hereafter "EMF noise floor"), whereas the second component is variable and is caused by all the elements within the network under consideration, including base-stations and access-points, as well as UEs.

Adverse effects on the network, or other networks to which the UEs have access, which would result from changing the distribution of UEs across connectivity paths in the network, can be avoided using a network management method embodying the present invention. For example, the impact of redistribution on load, signalling overhead, etc. in the network(s) can be taken into consideration.

In the context of the present application, connectivity paths, which are dependent upon a set of (potentially very complex) parameters, comprise for example:

(a) Networks (RATs) a UE can connect to (e.g. WiFi / 2G / 3G / 4G);
(b) Cells/layers a UE sees within a RAT (e.g. macro / femto);
(c) Connectivity paths available to a UE within a RAT based e.g. on MIMO / CoMP, or the availability of relaying / D2D features;
(d) A combination of two or more of (a), (b) and (c).

Each connectivity path has an associated EMF exposure impact on equipment users, which can differ from path to path.

The decision to change the distribution of UEs may be made in dependence upon one or more of: (i) a number of connectivity paths, in the first wireless communication network or one or more other wireless communication networks, available to the user equipments; (ii) the current value of the EMF exposure measure determined for the population of equipment users; (iii) geographical proximity of the user equipments to each other; (iv) the current value of an individual EMF exposure measure of one or more equipment users; (v) a change, or predicted change, in the EMF exposure measure, (vi) one or more performance criteria of the first communication network, (vii) changes in the distribution of user equipments across connectivity paths in the first wireless communication network or one or more other wireless communication networks; and (viii) changes in the population of equipment users.

In the context of the present application, performance criteria include (but are not limited to) channel conditions, QoS and SINR (signal-to-noise ratio).

A method embodying the first aspect of the invention may further comprise, when the decision is to change the distribution of user equipments, changing the distribution so as to tend to return the value of the EMF exposure measure of the population to a reference value of the EMF exposure measure which is commensurate with a quality of service metric of the user equipments having at least a predetermined value.

When the decision is to change the distribution of user equipments, in a method embodying the first aspect of the invention the distribution may be changed by: (i) transferring at least one of the user equipments from a connectivity path in the first communication network to a connectivity path in a second wireless communication network available to that user equipment, and/or (ii) transferring at least one of the user equipments from a first connectivity path in the first communication network to a second, different, connectivity path in the first communication network. Connectivity paths in the first or each wireless communication network available to the user equipments may be ranked in accordance with a ranking factor, and changing the distribution may comprise transferring at least one of the user equipments to the highest-ranked available connectivity path. For example, the ranking factor of each connectivity path may be dependent upon the anticipated effect of transferring user equipment to the connectivity path concerned on one or more of: (i) the value of the EMF exposure measure for the population of equipment users which would remain in the first wireless communication network after the transfer; (ii) one or more performance criteria of the first wireless communication network; and (iii) the value of an individual EMF exposure measure for the user of the equipment.

In a preferred method embodying the present invention, at least some of the user equipments are considered as a group for the purpose of making the decision. In this case the method may further comprise allocating the user equipments to one or more groups, ranking each of the resulting groups and identifying the highest-ranked group, and collectively changing the distribution across the connectivity paths of all the user equipments in the highest-ranked group. For example user equipments may be allocated to groups according to one or more of: (i) the number and/or type of connectivity paths shared by the group; (ii) the level of EMF exposure contributed by each user equipment in the group; (iii) quality of service requirements shared by the group; and (iv) a shared ability to enable a reduction in signalling overhead upon transfer of the user equipment to another connectivity path.

According to a wireless communication network management method embodying the an aspect of the present invention, for managing network connectivity of user equipments connected to a first wireless communication network, a distribution of user equipments across connectivity paths in the first wireless communication network may be changed based on a measure of EMF exposure experienced by a population of equipment users as a result of the first wireless communication network.

According to an embodiment of a second aspect of the present invention there is provided a wireless communication network management system for managing network connectivity of user equipments connected to a first wireless communication network, which system comprises apparatus configured to make a decision as to whether to change a distribution of user equipments across connectivity paths in the first wireless communication network, when it is desired to effect a change in, or to maintain, a value of a measure of electromagnetic field (EMF) exposure experienced by a population of equipment users as a result of the first wireless communication network.

The apparatus may be operable to make the decision in dependence upon one or more of: (i) a number of connectivity paths, in the first wireless communication network or one or more other wireless communication networks, available to the user equipments; (ii) the current value of the EMF exposure measure determined for the population of equipment users; (iii) geographical proximity of the user equipments to each other; (iv) the current value of an individual EMF exposure measure of one or more equipment users; (v) a change, or predicted change, in the EMF exposure measure, (vi) one or more performance criteria of the first communication network, (vii) changes in the distribution of user equipments across connectivity paths in the first wireless communication network or one or more other wireless communication networks; and (viii) changes in the population of equipment users.

When the decision is to change the distribution of user equipments, the system may be operable to change the distribution so as to tend to return the value of the EMF exposure measure of the population to a reference value of the EMF exposure measure which is commensurate with a quality of service metric of the user equipments having at least a predetermined value.

A system embodying the second aspect of the present invention may further comprise control means operable, when the decision is to change the distribution of user equipments, to change the distribution by bringing about (i) transfer of at least one of the user equipments from a connectivity path in the first communication network to a connectivity path in a second wireless communication network available to that user equipment, and/or (ii) transfer of at least one of the user equipments from a first connectivity path in the first communication network to a second, different, connectivity path in the first communication network. Connectivity paths in the first or each wireless communication network available to the user equipments may be ranked in accordance with a ranking factor, and the control means are operable to bring about transfer of at least one of the user equipments to the highest-ranked available connectivity path. The ranking factor of each connectivity path may be dependent upon the anticipated effect of transferring user equipment to the connectivity path concerned on one or more of: (i) the value of the EMF exposure measure for the population of equipment users which would remain in the first wireless communication network after the transfer; (ii) one or more performance criteria of the first wireless communication network; and (iii) the value of an individual EMF exposure measure for the user of the equipment.

In a system embodying the second aspect of the present invention, the apparatus may be operable to consider at least some of the user equipments as a group for the purpose of making the decision. In this case the apparatus may be operable to allocate the user equipments to one or more groups, rank each of the resulting groups and identify the highest-ranked group, and collectively change the distribution across the connectivity paths of all the user equipments in the highest-ranked group. User equipments may be allocated to groups according to one or more of: (i) the number and/or type of connectivity paths shared by the group; (ii) the level of EMF exposure contributed by each user equipment in the group; (iii) quality of service requirements shared by the group; and (iv) a shared ability to enable a reduction in signalling overhead upon transfer of the user equipment to another connectivity path.

According to an embodiment of a third aspect of the present invention there is provided a computer program which, when run on a computer, causes that computer to carry out a method embodying the first aspect of the present invention.

In one embodiment the EMF exposure measure is the weighted sum of the SARs, where the weighting is done based on user characteristics and/or morphologies and/or preferences with regard to EMF exposure, but is not limited to this.

Reference will now be made, by way of example, to the accompanying drawings, in which:

Figure 1 shows a network management system embodying the second aspect of the present invention; and

Figure 2 is a flowchart of a method embodying the first aspect of the present invention.

The present invention utilises the fact that, in most urban and sub-urban areas, the wireless environment is multi-RAT (multi-Radio Access Technology), meaning that to most UEs at least two wireless connectivity paths are available.

In an aspect of the invention a decision is made as to whether to change a distribution of user equipments across connectivity paths in a wireless communication network, when it is desired to effect a change in, or to maintain, a value of a measure of EMF exposure experienced by a population of equipment users as a result of the wireless communication network.

A directed change in the value of an EMF exposure measure of a population of equipment users may be desirable in a number of different circumstances. The value of the measure may have increased up to or beyond, or decreased below, a preset level, or have changed by more than a preset percentage over the last value calculated for the measure. Similarly, action to maintain a value of the EMF exposure measure may be taken if an undesirable change in the value of the measure is anticipated, owing to expected changes in one or more factors affecting it. A value for the EMF exposure measure for a population of equipment users can be determined, at regular or irregular intervals, for example by summing the estimated (or actual measured) EMF exposure resulting from each UE and that from other elements in the network. In this respect it can be helpful to pre-assign each UE (and hence its user) a predefined EMF exposure class indicating the level of EMF exposure experienced by a user of that UE based on the connectivity path employed by the UE. In its most simple form there may be just two classes, for example, denoting "low" and "higher" EMF exposure. The determined value of the EMF exposure measure for the population can be compared to a reference value for the measure.

For example, when the decision is to change the distribution of user equipments, the distribution may be changed so as to tend to return the value of the EMF exposure measure of the population to a reference value of the EMF exposure measure which is commensurate with a quality of service metric of the user equipments having at least a predetermined value.

In this regard, it is assumed that the system has an "equilibrium state" where the exposure is minimised for given QoS. The "equilibrium state" may be defined in terms of population exposure for a given environment, such as urban outdoor, indoor campus, rural, etc, at a given time, such as morning/afternoon/night.

Since, as mentioned above, different connectivity paths may have different EMF exposure impacts, changing the distribution of the UEs across the connectivity paths in the network will result in a change in the value of the EMF exposure measure of the population of equipment users as a result of the network. In the present invention the advantage of changing the distribution of UEs across the available connectivity paths, in order to change or maintain a value of the EMF exposure measure, is weighed against other factors to minimise or avoid unnecessary or undesirable effects on the or another network.

For example, the decision to change the distribution of UEs across connectivity paths in the network may be dependent upon one or more items of decision data comprising, for example: (i) a number of connectivity paths, in the first wireless communication network or one or more other wireless communication networks, available to the user equipments; (ii) the current value of the EMF exposure measure determined for the population of equipment users; (iii) geographical proximity of the user equipments to each other; (iv) the current value of an individual EMF exposure measure of one or more equipment users; (v) a change, or a predicted change, in the EMF exposure measure, (vi) one or more performance criteria of the first communication network, (vii) changes in the distribution of user equipments across connectivity paths in the first wireless communication network or one or more other wireless communication networks; and (vii) changes in the population of equipment users.

For example, it might be that action is taken to try to reduce the EMF exposure of those users whose EMF exposure has increased but is still relatively low, if the number of available connectivity paths is high. This would ensure that any "disturbance" to the system (e.g. signalling involved with the handover) is spread out, since UEs would be redistributed across different connectivity paths (in a targeted or possibly random manner).

In another example, if the number of available connectivity paths is comparatively low (for example, if there is only one alternative, say from 3G to 2G), then a redistribution of UEs will not be performed by default, perhaps only if the number of users affected is high enough so as to reduce the population exposure by a certain predefined percentage, or if QoS could not be preserved otherwise. This ensures that the number of users switched onto the same connectivity path is not such that the connectivity path is overloaded, unless a certain "necessity" criterion is satisfied.

In another example, a decision to redistribute UEs across the connectivity paths could be taken if, based on geographical proximity of UEs, it were advantageous (for example, because of reduced signalling overhead) to offload a group of users, for example from a single macro eNB to a single WiFi AP.

Grouping of UEs for vertical handover can be advantageous. Conventionally, vertical handover exploits a multi-RAT environment to locally select the best access technology for a given UE, typical optimization parameters being the user spectral efficiency, load balancing, and energy saving.

In an aspect of the invention at least some of the user equipments are considered as a group for the purpose of making a decision as to whether to change the distribution of UEs across the available connectivity paths. This may be done, for example, by allocating the user equipments to one or more groups, ranking each of the resulting groups on the basis of group ranking data and identifying the highest-ranked group, and collectively changing the distribution across the connectivity paths of all the user equipments in the highest-ranked group.

By way of example, and without limitation, UEs may be grouped according to one or more items of grouping data comprising: (i) the number and/or type of connectivity paths shared by the group; (ii) the level of EMF exposure contributed by each user equipment in the group; (iii) quality of service or other performance requirements shared by the group; and (iv) a shared ability to enable a reduction in signalling overhead upon transfer of the user equipment to another connectivity path (e.g. a shared ability to broadcast a message to switch to another wireless communication network).

In an embodiment of this aspect the grouping of users is done based on one or more of:

    a. Common number & type of "degrees of freedom" shared by the group
    b. Comparable level of EMF exposure contributed by members of the group
    c. Ability to broadcast "switch RAT" messages
    d. Common QoS requirements

In an aspect of the present invention the distribution of UEs across connectivity paths in the first wireless communication network is changed in order to effect a change in a measure of EMF exposure experienced by a population of equipment users as a result of the first wireless communication network. Changing the distribution may comprise one or more of: (i) transferring at least one of the user equipments from a connectivity path in the first communication network to a connectivity path in a second wireless communication network available to that user equipment; and (ii) transferring at least one of the user equipments from a first connectivity path in the first communication network to a second, different, connectivity path in the first communication network.

Connectivity paths in the first or each wireless communication network available to the UEs may be ranked in accordance with a ranking factor. In this case, changing the distribution may comprise transferring at least one of the user equipments to the highest-ranked available connectivity path.

The ranking factor of each connectivity path may be dependent upon the anticipated effect of transferring user equipment to the connectivity path concerned on one or more of: (i) the value of the EMF exposure measure for the population of equipment users which would remain in the first wireless communication network after the transfer; (ii) one or more performance criteria of the first wireless communication network; and (iii) the value of an individual EMF exposure measure for the user of the equipment.

For example, in one embodiment the ranking factor is dependent upon one or more of:

    a. the power level of each connectivity path (e.g. WiFi < 4G < 3G < 2G)
    b. the specific radio frequency, and/or whether the user is indoor/outdoor
    c. the signalling load required for potential switching
    d. the ease of grouping users for group handover
    e. the number of connectivity paths available to a UE (WiFi/2G/3G/4G; cells/layers the UE sees within a RAT; number of paths available based on MIMO/CoMP)
    f. the geographical proximity of UEs reporting an EMF exposure measure increase (for possible switching to D2D mode)
    g. the pair {number of connectivity paths, EMF class}

An embodiment of this aspect of the invention employs specific ordering of connectivity paths/RATs in terms of their EMF impact as well as potential "disturbance" to system (embodied in such parameters as signalling load required for potential switching, the ease of grouping users for group vertical handover, and so on) in order to select a connectivity path/RAT which will achieve the greatest change in the value of the EMF exposure measure for the population. For example, each available mechanism that would help alleviate EMF exposure, or restore the system to its previous "equilibrium state", may be ranked, where for a given user distribution in an area and their data traffic the minimum possible population exposure is achieved.

Embodiments of the present invention may enable network management strategies which achieve a reduction in population exposure based on varying users' distributions across various RATs (Radio Access Technologies) in an area. More specifically, with a view to reducing the population exposure, network/radio link configurations of UEs in a network may be changed in response to changes in the network, for example changes in the distribution and/or type of users across various types of connectivity paths (such as wideband/WiFi, home/office, on the move/stationary users) and/or changes in "individual" EMF exposure, e.g. which exposure "class" a user belongs to compared to where he or she was before.

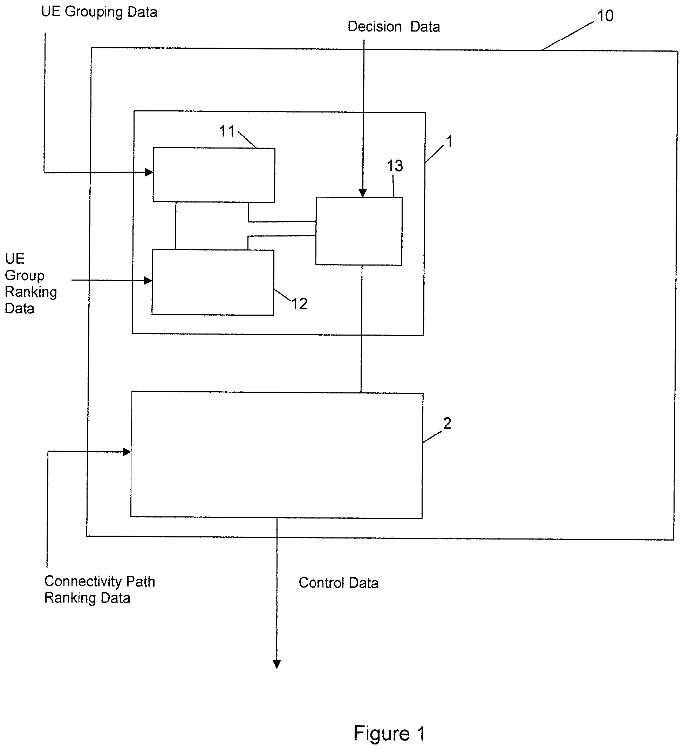

A wireless communication network management system 10, for managing network connectivity of user equipments connected to a first wireless communication network, which embodies the second aspect of the present invention is shown in Figure 1. The system 10 comprises decision apparatus 1 which includes a decision unit 13 configured to make a decision as to whether to change a distribution of user equipments across connectivity paths in the first wireless communication network, when it is desired to effect a change in, or to maintain, a value of a measure of electromagnetic field (EMF) exposure experienced by a population of equipment users as a result of the first wireless communication network.

The decision unit 13 receives decision data in dependence upon which it is operable to make the decision. For example, the decision data may comprise one or more of: (i) a number of connectivity paths, in the first wireless communication network or one or more other wireless communication networks, available to the user equipments; (ii) the current value of the EMF exposure measure determined for the population of equipment users; (iii) geographical proximity of the user equipments to each other; (iv) the current value of an individual EMF exposure measure of one or more equipment users; (v) a change, or predicted change, in the EMF exposure measure, (vi) one or more performance criteria of the first communication network, (vii) changes in the distribution of user equipments across connectivity paths in the first wireless communication network or one or more other wireless communication networks; and (viii) changes in the population of equipment users.

The system 10 further comprises control means 2. The control means 2 are operable, when the decision of the decision unit 1 is to change the distribution of user equipments, to change the distribution by bringing about (i) transfer of at least one of the user equipments from a connectivity path in the first communication network to a connectivity path in a second wireless communication network available to that user equipment, and/or (ii) transfer of at least one of the user equipments from a first connectivity path in the first communication network to a second, different, connectivity path in the first communication network. The control means 2 receive connectivity path ranking data on the basis of which connectivity paths in the first or each wireless communication network available to the user equipments are ranked in accordance with a ranking factor. The control means 2 are operable to bring about transfer of at least one of the user equipments to the highest-ranked available connectivity path. The ranking factor of each connectivity path may be dependent upon the anticipated effect of transferring user equipment to the connectivity path concerned on one or more of: (i) the value of the EMF exposure measure for the population of equipment users which would remain in the first wireless communication network after the transfer; (ii) one or more performance criteria of the first wireless communication network; and (iii) the value of an individual EMF exposure measure for the user of the equipment.

The decision apparatus 1 further comprises a UE grouping unit 11 and a UE group ranking unit 12, whereby the decision apparatus 1 is operable to consider at least some of the user equipments as a group for the purpose of making the decision. The UE grouping unit 11 is operable to allocate the user equipments to one or more groups on the basis of UE grouping data, such as one or more of: (i) the number and/or type of connectivity paths shared by the group; (ii) the level of EMF exposure contributed by each user equipment in the group; (iii) quality of service requirements shared by the group; and (iv) a shared ability to enable a reduction in signalling overhead upon transfer of the user equipment to another connectivity path.. The UE group ranking unit 12 is operable to rank each of the resulting groups and identify the highest-ranked group. The decision unit 13 is configured to decide to collectively change the distribution across the connectivity paths of all the user equipments in the highest-ranked group.

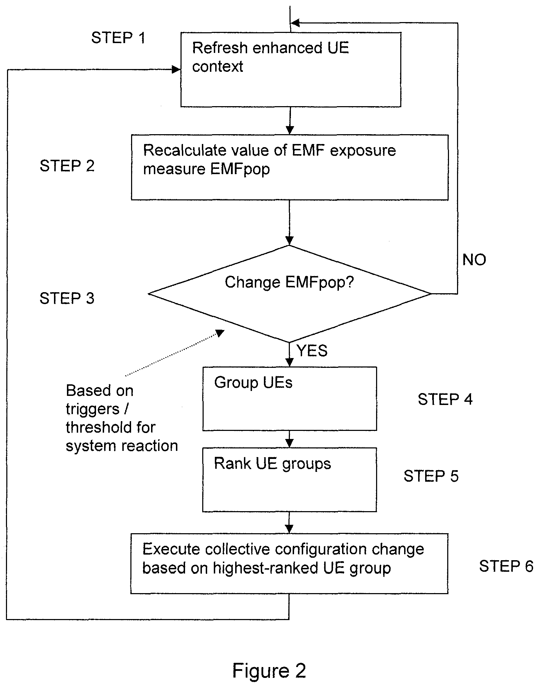

A method embodying an aspect of the present invention, in which users are grouped and any action taken is done on a group level, will now be described with reference to Figure 2. Additional/alterative ways of grouping users and actions subsequently performed are envisaged to those described in the following example. Grouping of users is not a feature essential to the invention, but it can be advantageous.

In Step 1 of the method of Figure 2, an enhanced UE context is refreshed. In an enhanced UE context of this embodiment users of wireless devices (or UEs) are assigned respective EMF exposure levels from a small number of predefined levels (in its simplest form, only two levels, low EMF and "not-so-low", or higher, EMF). In addition to that, each user has a QoS requirement. Users are also assigned a "number of degrees of freedom" which is the number of connectivity paths available to the UE. This can be the number of different networks a UE can connect to (WiFi/2G/3G/4G), cells/layers the UE sees within a RAT, the number of paths available based on MIMO/CoMP. The number of degrees of freedom can be limited in a further refinement to take account of user preferences regarding the trade-off between reduced EMF exposure vs. QoS requirements.

In the discussions below the following mathematical notation is employed:

1. For each UE within a target area "$A$" (the target area is determined by external constraints)

a. Minimum required QoS: $QoS_{min}$
b. Maximum allowed EMF Exposure: $EMF_{max}$
c. Number of degrees of freedom: $n$
d. Types of connectivity (degrees of freedom): $C = \{c_1, c_2, ... c_n\}$ where for example: $c_1$ = 3G, $c_2$ = WiFi @ 2.4G, $c_3$ = WiFi @ 5G and so on The values of "$C$" and "$n$" for any UE can vary as a function of time and UE location.
e. UE Preference: $P$; in its simplest form, it may be a Boolean parameter where $P=true$ implies that QoS trade-off in favour of lower EMF is acceptable.

2. For the target area "$A$"

a. Exhaustive set of UEs with active connection: $UEactive = \{UE_1, UE_2, ....UE_m\}$
b. EMF exposure contributed by an active UE on a certain connectivity type: $EMF_{UE}$
c. Population EMF Exposure: $EMF_{pop}$; this refers to only that component of total EMF exposure which is caused by the network under consideration

$$EMFpop = EMF_{nw} + EMF_{UE1} + EMF_{UE2} + .... + EMF_{UEm}$$

where $EMF_{nw}$ denotes the EMF caused by the network in its idle state
d. Number of degrees of freedom for all or a sub-set of active UEs: $n_{group}$

This parameter is explained in further detail under "Grouping of UEs"

The triggers and threshold for redistribution of UEs across connectivity paths in a network according to an embodiment of the invention will now be described.

If the Population Exposure of a population of equipment users in a target area "$A$" at a state of equilibrium is denoted by $EMF_{equi}$, then a threshold $EMF_{thres}$ is set such that at any given time, the condition must be satisfied:

$$EMFpop \leq EMF_{equi} + EMF_{thres}$$

The value of $EMF_{thres}$ may depend on a number of parameters that include but are not limited to:

- vulnerability to EMF exposure of the population in target area "$A$"
- network operator's compliance targets
- value of the EMF noise floor in the target area $A$

Additionally, the parameters may be ranked using a weighting factor.

A step-size $EMF_{step}$, which denotes a level increase in $EMF_{pop}$ that should trigger consideration of UE redistribution, is also set. The value of $EMF_{step}$ depends on parameters such as:

- number of degrees of freedom (e.g. the higher the number, the smaller the step-size)
- vulnerability to EMF exposure of target population (e.g. smaller step-size in areas such as schools, hospitals, etc.)
- EMF measurement capabilities of the system (if EMF estimates are unreliable, then there is no point in having too fine a reaction threshold; on the other hand, in the case of a tuneable measuring capability, finer quantization of measurements can be used, e.g. if the population is EMF-sensitive, or if regulations change)
- individual user preferences

Step 2 of the method of Figure 2 comprises recalculating a value for the EMF exposure measure *EMFpop.* In an embodiment of the present invention *EMFpop* is monitored at regular, predefined intervals $t_{int}$. The value of $t_{int}$ may remain constant or change, for example at different times of the day (for example, $t_{int}$ = *120 sec* between 0700-1100; *600 sec* between 1100-1700; *60 sec* between 1700-2000 and so on) or days in the year.

In Step 3 of the method of Figure 2 a decision is made as to whether it is desirable to effect a change in the value of *EMFpop.* If it is considered necessary to effect a change in the value of *EMFpop,* for example if *EMFpop* - $EMF_{equi}$ (= $\Delta EMF$) > $EMF_{step}$, then the following Steps 4, 5 and 6 are carried out:

Step 4. Grouping of UEs
Due to individual "n" & "C" property values for each of the active UEs, the value of "n" & "C" as applied to the entire group may be different. For example, consider a set of active UEs {UE1, UE2, UE3}.
Further assume corresponding degrees of freedom -

$$n_{UE1} = 4, \ C_{UE1} = \{c_0, c_1, c_2, c_3\};$$

$$n_{UE2} = 3, \ C_{UE2} = \{c_1, c_2, c_3\};$$

$$n_{UE3} = 3, \ C_{UE3} = \{c_2, c_3, c_4\};$$

Then, grouping may be performed in a number of combinations as follows with consequent degrees of freedom of the group:

$$G_1 = \{UE_1, UE_2, UE_3\}, \ n_{G1} = 2, \ C_{G1} = \{c_2, c_3\};$$

$$G_2 = \{UE_1, UE_2\}, \ n_{G2} = 3, \ C_{G2} = \{c_1, c_2, c_3\};$$

$$G_3 = \{UE_3\}, \ n_{G3} = 3, \ C_{G3} = \{c_2, c_3, c_4\};$$

Step 5. Ranking of Groups
The system analyses the merit of all potential combinations based on the combined impact on QoS and $EMF_{pop}$. The factors that impact QoS include, among others:

- Availability of scheduling resources especially in a target state of configuration
- Service in use by active UEs
- Signal strength at the UE for various configurations corresponding to available connectivity paths

The factors that impact $EMF_{pop}$ include, among others:

- Total number of state transitions, which in turn is a function of size of group
- EMF contributed by each of the available connectivity paths

A ranking is applied taking into account all the above factors and a group (the highest-ranked group) is chosen for next step.
Step 6. Change distribution of UEs based on Grouping

If there are one or more non-empty Groups from the previous two steps, then -

1. A collective change of configuration is executed for the highest ranked group of UEs through a reconfiguration process supported by the RAT technology of operation.
2. Further, if any of the lower ranked Groups comprise active UEs that were not part of the highest ranked Group, i.e. a "disjoint" set, then a collective change of configuration is executed for all UEs within such a group. This process may repeat iteratively for all groups. Since the step-size depends on the number of degrees of freedom *"n"*, $EMF_{step}$ may be iteratively refined during the grouping process.

If there are no non-empty Groups from the previous two steps 4 and 5, then it is assumed that there are no feasible options available for a transition that would allow lower EMF exposure while maintaining the QoS requirements.

The above embodiment has been described using QoS as an example, but the decision could be taken using one or more other performance criteria, or non-performance related criteria, as a factor.

The EMF-aware network management mechanisms described in the present application allow network operators to incorporate EMF exposure as one of their KPIs. New services could be offered to network operators, including: the implementation of a low-EMF, QoS-aware Network Management Service embodying the invention, and the implementation of a cloud Connection Manager, which could in some embodiments bypass the operator's network to implement user preferences.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

## Claims

1. A wireless communication network management method for managing network connectivity of user equipments connected to a first wireless communication network, which method comprises making a decision as to whether to change a distribution of user equipments across connectivity paths in the first wireless communication network, when it is desired to effect a change in, or to maintain, a value of a measure of electromagnetic field (EMF) exposure experienced by a population of equipment users as a result of the first wireless communication network, where each connectivity path has an associated EMF exposure impact on equipment users, such connectivity paths comprising one or more of:

   (a) radio access technology - RATs - that user equipments - UEs - used by the population of equipment users can connect to;
   (b) cells or layers that the UEs see within each RAT; and
   (c) connection options available to each UE within each RAT.

2. A method as claimed in claim 1, wherein the decision made is dependent upon one or more of: (i) a number of connectivity paths, in the first wireless communication network or one or more other wireless communication networks, available to the user equipments; (ii) the current value of the EMF exposure measure determined for the population of equipment users; (iii) geographical proximity of the user equipments to each other; (iv) the current value of an individual EMF exposure measure of one or more equipment users; (v) a change, or predicted change, in the EMF exposure measure, (vi) one or more performance criteria of the first communication network, (vii) changes in the distribution of user equipments across connectivity paths in the first wireless communication network or one or more other wireless communication networks; and (viii) changes in the population of equipment users.

3. A method as claimed in claim 1 or 2, further comprising, when the decision is to change the distribution of user equipments, changing the distribution so as to tend to return the value of the EMF exposure measure of the population to a reference value of the EMF exposure measure which is commensurate with a quality of service metric of the user equipments having at least a predetermined value.

4. A method as claimed in any preceding claim, further comprising, when the decision is to change the distribution of user equipments, changing the distribution by : (i) transferring at least one of the user equipments from a connectivity path in the first communication network to a connectivity path in a second wireless communication network available to that user equipment, and/or (ii) transferring at least one of the user equipments from a first connectivity path in the first communication network to a second, different, connectivity path in the first communication network.

5. A method as claimed in claim 4, wherein connectivity paths in the first or each wireless communication network available to the user equipments are ranked in accordance with a ranking factor, and changing the distribution comprises transferring at least one of the user equipments to the highest-ranked available connectivity path, wherein the ranking factor of each connectivity path is dependent upon the anticipated effect of transferring user equipment to the connectivity path concerned on one or more of: (i) the value of the EMF exposure measure for the population of equipment users which would remain in the first wireless communication network after the transfer; (ii) one or more performance criteria of the first wireless communication network; and (iii) the value of an individual EMF exposure measure for the user of the equipment.

6. A method as claimed in any preceding claim, wherein at least some of the user equipments are considered as a group for the purpose of making the decision.

7. A method as claimed in claim 6, comprising allocating the user equipments to one or more groups, ranking each of the resulting groups on the basis of group ranking data which comprises the overall value of the EMF exposure measure for the user equipments in that group and at least one other factor, identifying the highest-ranked group, and collectively changing the distribution across the connectivity paths of all the user equipments in the highest-ranked group.

8. A method as claimed in claim 6 or 7, wherein user equipments are allocated to groups according to one or more of: (i) the number and/or type of connectivity paths shared by the group; (ii) the level of EMF exposure contributed by each user equipment in the group; (iii) quality of service requirements shared by the group; and (iv) a shared ability to enable a reduction in signalling overhead upon transfer of the user equipment to another connectivity path.

9. A wireless communication network management system (10) for managing network connectivity of user equipments connected to a first wireless communication network, which system comprises apparatus (1) configured to make a decision as to whether to change a distribution of user equipments across connectivity paths in the first wireless communication network, when it is desired to effect a change in, or to maintain, a value of a measure of electromagnetic field (EMF) exposure experienced by a population of equipment users as a result of the first wireless communication network, where each connectivity path has an associated EMF exposure impact on equipment users, such connectivity paths comprising one or more of:

> (a) radio access technology - RATs - that user equipments - UEs - used by the population of equipment users can connect to;
> (b) cells or layers that the UEs see within each RAT; and
> (c) connection options available to each UE within each RAT.

10. A system as claimed in claim 9, comprising decision means (13) operable to make the decision in dependence upon one or more of: (i) a number of connectivity paths, in the first wireless communication network or one or more other wireless communication networks, available to the user equipments; (ii) the current value of the EMF exposure measure determined for the population of equipment users; (iii) geographical proximity of the user equipments to each other; (iv) the current value of an individual EMF exposure measure of one or more equipment users; (v) a change, or predicted change, in the EMF exposure measure, (vi) one or more performance criteria of the first communication network, (vii) changes in the distribution of user equipments across connectivity paths in the first wireless communication network or one or more other wireless communication networks; and (viii) changes in the population of equipment users.

11. A system as claimed in claim 9 or 10, further comprising control means (2) operable, when the decision is to change the distribution of user equipments, to change the distribution by bringing about (i) transfer of at least one of the user equipments from a connectivity path in the first communication network to a connectivity path in a second wireless communication network available to that user equipment, and/or (ii) transfer of at least one of the user equipments from a first connectivity path in the first communication network to a second, different, connectivity path in the first communication network.

12. A system as claimed in claim 11, wherein connectivity paths in the first or each wireless communication network available to the user equipments are ranked in accordance with a ranking factor, and the control means are operable to bring about transfer of at least one of the user equipments to the highest-ranked available connectivity path, wherein the ranking factor of each connectivity path is dependent upon the anticipated effect of transferring user equipment to the connectivity path concerned on one or more of: (i) the value of the EMF exposure measure for the population of equipment users which would remain in the first wireless communication network after the transfer; (ii) one or more performance criteria of the first wireless communication network; and (iii) the value of an individual EMF exposure measure for the user of the equipment.

**13.** A system as claimed in any one of claims 9 to 12, wherein the apparatus (1) is operable to consider at least some of the user equipments as a group for the purpose of making the decision.

**14.** A system as claimed in claim 13, wherein the apparatus (1) further comprises grouping means (11), operable to allocate the user equipments to one or more groups, and group ranking means (12), operable to rank each of the resulting groups on the basis of group ranking data, which comprises the overall value of the EMF exposure measure for the user equipments in that group and at least one other factor, and identify the highest-ranked group, and the apparatus (1) is operable to collectively change the distribution across the connectivity paths of all the user equipments in the highest-ranked group.

**Patentansprüche**

**1.** Drahtloskommunikationsnetzwerkmanagementverfahren zum Managen der Netzwerkkonnektivität von Benutzergeräten, die mit einem ersten Drahtloskommunikationsnetzwerk verbunden sind, wobei das Verfahren eine Entscheidung darüber umfasst, ob eine Verteilung von Benutzergeräten über Konnektivitätspfade hinweg in dem ersten Drahtloskommunikationsnetzwerk geändert werden sollen, wenn gewünscht ist, eine Änderung eines Werts eines Maßes eines Kontakts mit einem elektromagnetischen Feld (EMF) zu bewirken oder zu erhalten, dem eine Population von Gerätebenutzern aufgrund des ersten Drahtloskommunikationsnetzwerks unterliegt, wobei jeder Konnektivitätspfad eine entsprechende EMF-Kontaktauswirkung auf Gerätebenutzer hat, und diese Konnektivitätspfade einen oder mehrere der folgenden umfassen:

    a. Funkzugriffstechnologie - RATs - mit denen sich Benutzergeräte - UEs -, die durch die Population der Gerätebenutzer verwendet werden, verbinden können;
    b. Zellen oder Schichten, die die UEs in jedem RAT sehen; und
    c. Verbindungsoptionen, die für jedes UE innerhalb jedes RAT zur Verfügung stehen.

**2.** Verfahren wie in Anspruch 1 beansprucht, wobei die Entscheidung abhängig von einem oder mehreren der folgenden getroffen wird: (i) einer Anzahl Konnektivitätspfade in einem ersten Drahtloskommunikationsnetzwerk oder einem oder mehreren anderen Drahtloskommunikationsnetzwerken, die den Benutzergeräten zur Verfügung stehen; (ii) dem aktuellen Wert des EMF-Kontaktmaßes, der für die Population der Gerätebenutzer bestimmt wird; (iii) der geographischen Nähe der Benutzergeräte zueinander; (iv) dem aktuellen Wert eines einzelnen EMF-Kontaktmaßes eines oder mehrerer Gerätebenutzer; (v) einer Änderung oder einer vorhergesagten Änderung des EMF-Kontaktmaßes, (vi) eines oder mehrerer Leistungskriterien des ersten Kommunikationsnetzes, (vii) Änderungen der Verteilung der Benutzergeräte über Konnektivitätspfade im ersten Drahtloskommunikationsnetzwerk oder über ein oder mehrere andere Drahtloskommunikationsnetzwerke; und (viii) Änderungen an der Population der Gerätebenutzer.

**3.** Verfahren nach Anspruch 1 oder 2, ferner umfassend einen Wechsel der Verteilung, wenn die Entscheidung über den Wechsel der Verteilung der Benutzergeräte getroffen wird, sodass der Wert des EMF-Kontaktmaßes der Population eher auf einen Referenzwert des EMF-Kontaktmaßes zurückgeführt wird, der einer Qualität der Leistungsmetrik der Benutzergeräte entspricht, die mindestens einen vorgegebenen Wert aufweist.

**4.** Verfahren nach einem der vorhergehenden Ansprüche, ferner umfassend, wenn die Entscheidung getroffen wird, die Verteilung der Benutzergeräte zu ändern, die Änderung der Verteilung durch: (i) Übertragung von mindestens einem der Benutzergeräte von einem Konnektivitätspfad in dem ersten Kommunikationsnetzwerk auf einen Konnektivitätspfad eines zweiten Drahtloskommunikationsnetzwerks, das für das Benutzergerät zur Verfügung steht und/oder (ii) Übertragung von mindestens einem der Benutzergeräte von einem ersten Konnektivitätspfad in dem ersten Kommunikationsnetzwerk auf einen zweiten anderen Konnektivitätspfad in dem ersten Kommunikationsnetzwerk.

**5.** Verfahren nach Anspruch 4, wobei die Konnektivitätspfade, die in dem ersten oder jedem Drahtloskommunikationsnetzwerk für die Benutzergeräte zur Verfügung stehen, einem Rangordnungsfaktor entsprechend sortiert werden, und die Änderung der Verteilung die Übertragung von mindestens einem der Benutzergeräte auf den am höchsten eingestuften Konnektivitätspfad umfasst, wobei der Rangordnungsfaktor jedes Konnektivitätspfads von der erwarteten Wirkung der Übertragung des Benutzergeräts auf den jeweiligen Konnektivitätspfad über eines oder mehrere der folgenden abhängig ist: (i) dem Wert des EMF-Kontaktmaßes für die Population der Gerätebenutzer, die in nach der Übertragung in dem ersten Drahtloskommunikationsnetzwerk verbleiben; (ii) einem oder mehreren Leistungskriterien eines ersten Drahtloskommunikationsnetzwerks; und (iii) dem Wert eines einzelnen EMF-Kontaktmaßes für den Benutzer des Geräts.

6. Verfahren nach einem der vorhergehenden Ansprüche, wobei mindestens einige der Benutzergeräte zum Zweck des Treffens der Entscheidung als Gruppe betrachtet werden.

7. Verfahren nach Anspruch 6, umfassend die Zuordnung der Benutzergeräte zu einer oder mehreren Gruppen, Sortieren jeder der entstehenden Gruppen auf Grundlage der Gruppenrangordnungsdaten, die den Gesamtwert des EMF-Kontaktmaßes für die Benutzergeräte in der Gruppe und mindestens einen weiteren Faktor umfassen, Identifizieren der Gruppe mit dem höchsten Rang und kollektive Änderung der Verteilung über die Konnektivitätspfade aller Benutzergeräte in der Gruppe mit dem höchsten Rang.

8. Verfahren nach Anspruch 6 oder 7, wobei die Benutzergeräte nach einem oder mehreren der folgenden Punkte Gruppen zugeordnet werden: (i) die Anzahl und/oder Art der Konnektivitätspfade, die durch die Gruppe geteilt werden; (ii) die Höhe des EMF-Kontakts, den jedes Benutzergerät in der Gruppe beiträgt; (iii) die Qualität der Leistungsanforderungen, die durch die Gruppe geteilt werden; und (iv) eine geteilte Fähigkeit, bei Übertragung des Benutzergeräts auf einen anderen Konnektivitätspfad eine Verringerung des Signalisierungs-Overheads zu erreichen.

9. Drahtloskommunikationsnetzwerkmanagementsystem (10) zum Management der Netzwerkkonnektivität von Benutzergeräten, die mit einem ersten Drahtloskommunikationsnetzwerk verbunden sind, wobei das System eine Vorrichtung (1) umfasst, die konfiguriert ist, eine Entscheidung darüber zu treffen, ob eine Änderung einer Verteilung von Benutzergeräten über die Konnektivitätspfade in dem ersten Drahtloskommunikationsnetzwerk ausgeführt werden soll, wenn gewünscht wird, einen Wert eines Maßes eines Kontakts mit einem elektromagnetischen Felds (EMF) zu verringern oder zu erhalten, den eine Population Gerätebenutzer aufgrund des ersten Drahtloskommunikationsnetzwerks erfährt, wobei jeder Konnektivitätspfad eine zugewiesene EMF-Kontaktwirkung auf die Gerätebenutzer hat und diese Konnektivitätspfade eines oder mehrere der folgenden umfassen:

    a. Funkzugriffstechnologie - RATs - mit denen sich Benutzergeräte - UEs -, die durch die Population der Gerätebenutzer verwendet werden, verbinden können;
    b. Zellen oder Schichten, die die UEs in jedem RAT sehen; und
    c. Verbindungsoptionen, die für jedes UE innerhalb jedes RAT zur Verfügung stehen.

10. System nach Anspruch 9, umfassend ein Entscheidungsmittel (13), das verwendet werden kann, um eine Entscheidung abhängig von einem oder mehreren der folgenden zu treffen: (i) einer Anzahl Konnektivitätspfade in einem ersten Drahtloskommunikationsnetzwerk oder einem oder mehreren anderen Drahtloskommunikationsnetzwerken, die den Benutzergeräten zur Verfügung stehen; (ii) dem aktuellen Wert des EMF-Kontaktmaßes, der für die Population der Gerätebenutzer bestimmt wird; (iii) der geographischen Nähe der Benutzergeräte zueinander; (iv) dem aktuellen Wert eines einzelnen EMF-Kontaktmaßes eines oder mehrerer Gerätebenutzer; (v) einer Änderung oder einer vorhergesagten Änderung des EMF-Kontaktmaßes, (vi) eines oder mehrerer Leistungskriterien des ersten Kommunikationsnetzes, (vii) Änderungen der Verteilung der Benutzergeräte über Konnektivitätspfade im ersten Drahtloskommunikationsnetzwerk oder über ein oder mehrere andere Drahtloskommunikationsnetzwerke; und (viii) Änderungen an der Population der Gerätebenutzer.

11. System nach Anspruch 9 oder 10, ferner umfassend ein Steuermittel (2), das bedient werden kann, wenn die Entscheidung getroffen wird, die Verteilung der Benutzergeräte zu ändern, um die Verteilung zu ändern durch (i) Übertragung von mindestens einem der Benutzergeräte von einem Konnektivitätspfad in dem ersten Kommunikationsnetzwerk auf einen Konnektivitätspfad eines zweiten Drahtloskommunikationsnetzwerks, das für das Benutzergerät zur Verfügung steht, und/oder (ii) Übertragung von mindestens einem der Benutzergeräte von einem ersten Konnektivitätspfad in dem ersten Kommunikationsnetzwerk auf einen zweiten anderen Konnektivitätspfad in dem ersten Kommunikationsnetzwerk.

12. System nach Anspruch 11, wobei die Konnektivitätspfade, die in dem ersten oder jedem Drahtloskommunikationsnetzwerk für die Benutzergeräte zur Verfügung stehen, einem Rangordnungsfaktor entsprechend sortiert werden, und das Steuermittel verwendet werden kann, die Übertragung von mindestens einem der Benutzergeräte auf den am höchsten eingestuften Konnektivitätspfad auszulösen, wobei der Rangordnungsfaktor jedes Konnektivitätspfads von der erwarteten Wirkung der Übertragung des Benutzergeräts auf den jeweiligen Konnektivitätspfad über eines oder mehrere der folgenden abhängig ist: (i) dem Wert des EMF-Kontaktmaßes für die Population der Gerätebenutzer, die in nach der Übertragung in dem ersten Drahtloskommunikationsnetzwerk verbleiben; (ii) einem oder mehreren Leistungskriterien eines ersten Drahtloskommunikationsnetzwerks; und (iii) dem Wert eines einzelnen EMF-Kontaktmaßes für den Benutzer des Geräts.

**13.** System nach einem der Ansprüche 9 bis 12, wobei die Vorrichtung (1) verwendet werden kann, um mindestens einige der Benutzergeräte zum Zweck des Treffens der Entscheidung als Gruppe zu betrachten.

**14.** System nach Anspruch 13, wobei die Vorrichtung (1) ferner ein Gruppierungsmittel (11) umfasst, das verwendet werden kann, die Benutzergeräte einer oder mehreren Gruppen zuzuordnen, und ein Gruppensortierungsmittel (12), das verwendet werden kann, jede der entstehenden Gruppen auf Grundlage der Gruppenrangordnungsdaten, die den Gesamtwert des EMF-Kontaktmaßes für die Benutzergeräte in der Gruppe und mindestens einen weiteren Faktor umfassen, zu sortieren, die Gruppe mit dem höchsten Rang zu identifizieren und die Vorrichtung (1) verwendet werden kann, um die Verteilung über die Konnektivitätspfade aller Benutzergeräte in der Gruppe mit dem höchsten Rang kollektiv zu ändern.

**Revendications**

**1.** Procédé de gestion de réseau de communication sans fil pour la gestion d'une connectivité de réseau d'équipements utilisateurs connectés à un premier réseau de communication sans fil, ce procédé comprenant la prise d'une décision s'il faut changer une distribution d'équipements utilisateurs sur des trajets de connectivité dans le premier réseau de communication sans fil, lorsqu'on souhaite modifier ou maintenir une valeur d'une mesure d'exposition à un champ électromagnétique (EMF) subie par une population d'utilisateurs d'équipements qui résulte du premier réseau de communication sans fil, où chaque trajet de connectivité présente un impact d'exposition EMF associé sur des utilisateurs d'équipements, ces trajets de connectivité comprenant un ou plusieurs éléments parmi :

(a) une technologie d'accès radio (RAT) à laquelle les équipements utilisateurs (UE) utilisés par la population d'utilisateurs d'équipements peuvent se connecter ;
(b) des cellules ou couches que les UE voient à l'intérieur de chaque RAT ; et
(c) des options de connexion disponibles à chaque UE à l'intérieur de chaque RAT.

**2.** Procédé selon la revendication 1, dans lequel la décision prise dépend d'un ou plusieurs éléments parmi : (i) un nombre trajets de connectivité, dans le premier réseau de communication sans fil ou un ou plusieurs autres réseaux de communication sans fil, disponibles pour les équipements utilisateurs ; (ii) la valeur courant de la mesure d'exposition EMF déterminé pour la population d'utilisateurs d'équipements ; (iii) la proximité géographique des équipements utilisateurs les uns par rapport aux autres ; (iv) la valeur courante d'une mesure d'exposition EMF individuelle d'un ou plusieurs utilisateurs d'équipements ; (v) un changement, ou un changement prédit, de la mesure d'exposition EMF ; (vi) un ou plusieurs critères de performances du premier réseau de communication, (vii) des changements dans la distribution des équipements utilisateurs sur les trajets de connectivité dans le premier réseau de communication sans fil ou un ou plusieurs autres réseaux de communication sans fil ; et (viii) des changements dans la population d'utilisateurs d'équipements.

**3.** Procédé selon la revendication 1 ou 2, comprenant en outre, lorsque la décision est de changer la distribution des équipements utilisateurs, le changement de la distribution de façon à tendre à faire revenir la valeur de la mesure d'exposition EMF de la population à une valeur de référence de la mesure d'exposition EMF qui est proportionnelle à une qualité de métrique de service des équipements utilisateurs ayant au moins une valeur prédéterminée.

**4.** Procédé selon l'une des revendications précédentes, comprenant en outre, lorsque la décision est de changer la distribution des équipements utilisateurs, le changement de la distribution :

(i) en transférant au moins un des équipements utilisateurs d'un trajet de connectivité dans le premier réseau de communication vers un trajet de connectivité dans un deuxième réseau de communication sans fil disponible pour cet équipement utilisateur et/ou (ii) en transférant au moins un des équipements utilisateurs d'un premier trajet de connectivité dans le premier réseau de communication vers un deuxième trajet de connectivité différent dans le premier réseau de communication.

5. Procédé selon la revendication 4, dans lequel les trajets de connectivité dans le premier ou dans chaque réseau de communication sans fil disponible pour les équipements utilisateurs sont classés en fonction d'un facteur de classement et le changement de distribution comprend le transfert d'au moins un des équipements utilisateurs vers le trajet de connectivité le plus haut classé disponible, le facteur de classement de chaque trajet de connectivité dépendant de l'effet anticipé du transfert de l'équipement utilisateur au trajet de connectivité concerné sur un ou plusieurs éléments parmi :

(i) la valeur de la mesure d'exposition EMF pour la population d'utilisateurs d'équipements qui resterait dans le premier réseau de communication sans fil après le transfert ; (ii) un ou plusieurs critères de performances du premier réseau de communication sans fi ; et (iii) la valeur d'une mesure d'exposition EMF pour l'utilisateur de l'équipement.

6. Procédé selon l'une des revendications précédentes, dans lequel au moins certains des équipements utilisateurs sont considérés comme un groupe pour la prise de décision.

7. Procédé selon la revendication 6, comprenant l'allocation des équipements utilisateurs à un ou plusieurs groupes, le classement des groupes qui en résultant sur la base de données de classement de groupes qui comprennent la valeur totale de la mesure d'exposition EMF pour les équipements utilisateurs de ce groupe et au moins un autre facteur identifiant le groupe au classement le plus élevé et le changement collectif de la distribution sur les trajets de connectivité de tous les équipements utilisateurs du groupe au classement le plus élevé.

8. Procédé selon la revendication 6 ou 7, dans lequel les équipements sont alloués à des groupes selon un ou plusieurs éléments parmi : (i) le nombre et/ou le type de trajets de connectivité partagés par le groupe ; (ii) le niveau d'exposition EMF à la hauteur duquel contribue chaque équipement utilisateur du groupe ; (iii) les exigences de qualité de service partagées par le groupe ; et (iv) une capacité partagée permettant une réduction de l'en-tête de signalisation lors du transfert de l'équipement utilisateur vers un autre trajet de connectivité.

9. Système de gestion de réseau de communication sans fil (10) pour la gestion d'une connectivité de réseau d'équipements utilisateurs connectés à un premier réseau de communication sans fil, ce système comprenant un appareil (1) conçu pour prendre une décision s'il faut changer une distribution d'équipements utilisateurs sur des trajets de connectivité dans le premier réseau de communication sans fil, lorsqu'on souhaite modifier ou maintenir une valeur d'une mesure d'exposition à un champ électromagnétique (EMF) subie par une population d'utilisateurs d'équipements qui résulte du premier réseau de communication sans fil, où chaque trajet de connectivité présente un impact d'exposition EMF associé sur des utilisateurs d'équipements, ces trajets de connectivité comprenant un ou plusieurs éléments parmi :

(a) une technologie d'accès radio (RAT) à laquelle les équipements utilisateurs (UE) utilisés par la population d'utilisateurs d'équipements peuvent se connecter ;
(b) des cellules ou couches que les UE voient à l'intérieur de chaque RAT ; et
(c) des options de connexion disponibles à chaque UE à l'intérieur de chaque RAT.

10. Système selon la revendication 9, comprenant des moyens de décision (13) conçus pour prendre la décision en fonction d'un ou plusieurs éléments parmi : (i) un nombre trajets de connectivité, dans le premier réseau de communication sans fil ou un ou plusieurs autres réseaux de communication sans fil, disponibles pour les équipements utilisateurs ; (ii) la valeur courant de la mesure d'exposition EMF déterminé pour la population d'utilisateurs d'équipements ; (iii) la proximité géographique des équipements utilisateurs les uns par rapport aux autres ; (iv) la valeur courante d'une mesure d'exposition EMF individuelle d'un ou plusieurs utilisateurs d'équipements ; (v) un changement, ou un changement prédit, de la mesure d'exposition EMF ; (vi) un ou plusieurs critères de performances du premier réseau de communication, (vii) des changements dans la distribution des équipements utilisateurs sur les trajets de connectivité dans le premier réseau de communication sans fil ou un ou plusieurs autres réseaux de communication sans fil ; et (viii) des changements dans la population d'utilisateurs d'équipements.

11. Système selon la revendication 9 ou 10, comprenant en outre des moyens de contrôle (2) conçus, lorsque la décision est de changer la distribution des équipements utilisateurs, pour changer la distribution (i) en transférant au moins un des équipements utilisateurs d'un trajet de connectivité dans le premier réseau de communication vers un trajet de connectivité dans un deuxième réseau de communication sans fil disponible pour cet équipement utilisateur et/ou (ii) en transférant au moins un des équipements utilisateurs d'un premier trajet de connectivité dans le premier réseau de communication vers un deuxième trajet de connectivité différent dans le premier réseau de communication.

12. Système selon la revendication 11, dans lequel les trajets de connectivité dans le premier ou dans chaque réseau de communication sans fil disponible pour les équipements utilisateurs sont classés en fonction d'un facteur de classement et le changement de distribution comprend le transfert d'au moins un des équipements utilisateurs vers le trajet de connectivité le plus haut classé disponible, le facteur de classement de chaque trajet de connectivité dépendant de l'effet anticipé du transfert de l'équipement utilisateur au trajet de connectivité concerné sur un ou plusieurs éléments parmi :

(i) la valeur de la mesure d'exposition EMF pour la population d'utilisateurs d'équipements qui resterait dans le premier réseau de communication sans fil après le transfert ; (ii) un ou plusieurs critères de performances du premier réseau de communication sans fi ; et (iii) la valeur d'une mesure d'exposition EMF pour l'utilisateur de l'équipement.

13. Système selon l'une des revendications 9 à 12, dans lequel l'appareil (1) est conçu pour considérer au moins certains des équipements utilisateurs comme un groupe pour la prise de décision.

14. Système selon la revendication 13, dans lequel l'appareil (1) comprend en outre des moyens de regroupement (11) conçus pour allouer des équipements utilisateurs à un ou plusieurs groupes, et des moyens de classement de groupes (12), conçu pour classer chacun des groupes qui en résulte sur la base de données de classement de groupes qui comprennent la valeur totale de la mesure d'exposition EMF pour les équipements utilisateurs de ce groupe et au moins un autre facteur identifiant le groupe au classement le plus élevé et l'appareil (1) étant conçu pour changer collectivement la distribution sur les trajets de connectivité de tous les équipements utilisateurs du groupe au classement le plus élevé.

UE Grouping Data

Decision Data

10

11

13

1

UE
Group
Ranking
Data

12

2

Connectivity Path
Ranking Data

Control Data

Figure 1

16

STEP 1 | Refresh enhanced UE context

STEP 2 | Recalculate value of EMF exposure measure EMFpop

STEP 3 | Change EMFpop? — NO — YES

Based on triggers / threshold for system reaction

Group UEs | STEP 4

Rank UE groups | STEP 5

Execute collective configuration change based on highest-ranked UE group | STEP 6

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2670197 A